# EUROPÄISCHE PATENTSCHRIFT

(11) **EP 2 506 936 B1**
(45) Veröffentlichungstag und Bekanntmachung des Hinweises auf die Patenterteilung: **25.06.2014**
(21) Anmeldenummer: 10805591.4
(22) Anmeldetag: 30.11.2010
(51) Int. Cl.: F16G 3/16

(54) **VORRICHTUNG ZUM BEFESTIGEN UND KLEMMEN VON GURTBÄNDERN**
DEVICE FOR FASTENING AND CLAMPING STRAPS
DISPOSITIF POUR FIXER ET SERRER DES SANGLES

(30) Priorität: 02.12.2009 DE 102009044739
(43) Veröffentlichungstag der Anmeldung: 10.10.2012
(73) Patentinhaber: Riedrich, Andreas, 66892 Bruchmühlbach (DE)
(72) Erfinder: Riedrich, Andreas, 66892 Bruchmühlbach (DE)
(74) Vertreter: Vièl, Christof
(86) Internationale Anmeldenummer: PCT/DE2010/075146
(87) Internationale Veröffentlichungsnummer: WO 2011/066828

(56) Entgegenhaltungen:
- WO-A1-83/01433
- DE-B- 1 233 124
- DE-U1- 8 437 581
- FR-A1- 2 293 950

## Beschreibung

Die Erfindung betrifft eine Vorrichtung zum Befestigen und Klemmen von Gurtbändern.

Gurtbänder (auch als Spanngurte bezeichnet) werden in vielen Bereichen verwendet, insbesondere zum Festspannen von zu transportierenden Gegenständen.

Lange Gurtbänder oder auch Schlauchbänder mit Breiten von 25, 30, 35 oder 50 mm werden auch für die Sportart Slacklinen (Slacklen, Slacklining) verwendet, bei der man auf einem Gurtband balanciert, das zwischen zwei Befestigungspunkten gespannt ist. Das Gurtband wird an einem Ende mit einem Schraubkarabiner oder Schäkel befestigt. Am anderen Ende wird zum Spannen des Gurtbandes entweder ein Flaschenzug, wie man ihn aus dem Alpinismus kennt, eine Spanngurtratsche oder ein Hubzeug verwendet. Da sogenannte Longlines, welche teilweise über Distanzen von mehreren hundert Metern gespannt werden und Highlines, die in einigen Metern bis zu mehreren hundert Metern Höhe angebracht werden teilweise mit mehr als 15 kN vorgespannt werden müssen, damit man sie begehen kann, müssen die Klemmvorrichtungen hohe Bruchlasten aufweisen. Viele herkömmliche Klemmvorrichtungen sind für die Aufnahme entsprechender Kräfte nicht ausgelegt und beschädigen zudem das Gurtband, was zu einem Versagen desselben führen kann. Hinzu kommt, daß es erforderlich sein kann, die Klemmvorrichtung von dem Gurtband zu entfernen bzw. auf ein bereits gespanntes Gurtband aufzubringen. Dies ist mit den bekannten Klemmvorrichtungen nicht möglich.

Aus der DE 1 773 606 U1 ist eine selbstschließende Parallelklemme zum Spannen von Drähten mit zwei symmetrischen Kniehebeln bekannt, bei der eine über einen Führungsstab angeordnete Druckfeder zwischen Zugbügel und dem die Klemmbacken tragenden Querstück angeordnet ist.

Die DE 30 38 418 A1 beschreibt eine Seil- oder Kabelklemme mit einem Paar von parallel zueinander geführten und verschiebbar in einem Gehäuse angeordneten, keilförmigen Klemmbacken, die gegebenenfalls durch Federbelastung in Klemmstellung gegen das Seil oder das Kabel gedrückt werden, wobei zum Lösen der Backen aus der Klemmstellung eine auf mindestens eine der Backen einwirkender Exzenter vorgesehen ist.

Aus der DE 81 31 815 U1 ist eine Parallelklemme für Fernmelde-Freileitungen bekannt, bei welcher die einzuklemmende Freileitung, die auch aus einem blanken Draht bestehen kann, zwischen zwei sich beim Klemmvorgang aufeinander zu bewegenden Klemmbacken eingeklemmt wird. Dort wird ausgeführt, daß mit einer solchen Parallelklemme das Abspannen von beliebigen Drahtlängen oder Seillängen zwar leicht möglich ist, jedoch auf das abgespannte Seil bzw. den abgespannten Draht nicht beliebige Zugkräfte angelegt werden können, da sonst ein Gleiten des Drahtes oder Seils zwischen den Parallelklemmen erfolgt.

Die DE 89 01 065 U1 beschreibt eine Vorrichtung zum sicheren Festhalten eines band- oder streifenförmigen Materials, z.B. eines Flachkabels, an einer Montagefläche, wobei das band- oder streifenförmige Material im Innern der scharnierartigen Vorrichtung verklemmt wird.

Aus der DE 10 2007 045 170 A1 ein Klemmschloß für ein Spannmittel bekannt, wobei in einem Gehäuse ein Anschlagsteg und eine Schwenkachse für ein Kammelement angeordnet sind.

Schließlich ist aus der WO 83/01433 A1 eine Vorrichtung zum Befestigen und Klemmen von Gurtbändern bekannt, die ein Paar Schwenkhebel aufweist, wobei zwischen den Schwenkhebeln zwei parallel zueinander angeordnete Klemmplatten und ein Keilelement mit ebenen Klemmflächen angeordnet sind.

Aufgabe der vorliegenden Erfindung ist es, eine Vorrichtung zum Befestigen und Klemmen von Gurtbändern zu schaffen, die auch hohen mechanischen Beanspruchungen dauerhaft standhält und nicht zu Schädigungen des Gurtbandes führt.

Diese Aufgabe wird erfindungsgemäß für die Vorrichtung zum Befestigen und Klemmen von Gurtbändern dadurch gelöst, daß die Breite der Klemmflächen mindestens der Breite des Gurtbandes entspricht und daß Mittel zum Entfernen der Vorrichtung von dem gespannten Gurtband bzw. zum Aufbringen der Vorrichtung auf ein bereits gespanntes Gurtband vorgesehen sind.

Die Schwenkhebel werden an einer Spannvorrichtung, beispielsweise einem Kettenzug, befestigt, bei dessen Betätigung die Schwenkhebel den Zug aufnehmen und diesen auf die Klemmplatten übertragen, so daß die Klemmplatten mit ihren Klemmflächen gegeneinander gepreßt werden, wodurch eine feste Klemmung des zwischen den Klemmflächen angeordneten Gurtbandes erfolgt.

Es kann erforderlich sein, die Klemmvorrichtung von dem gespannten Gurtband zu entfernen bzw. auf ein bereits gespanntes Gurtband aufzubringen. Dies kann beispielsweise durch Entfernen einer der Klemmplatten oder durch Entfernen eines Paars von Schwenkhebeln oder einer Kombination hiervon erfolgen.

Mit einer derartigen Vorrichtung, die auch den hohen mechanischen Beanspruchungen dauerhaft standhält, wie sie beispielsweise beim Spannen sehr langer Slacklines, sogenannten Longlines, auftreten, kann ein Gurtband sicher geklemmt werden, wobei mit zunehmender Spannung des Gurtbandes die Klemmung stärker wird. Das Gurtband wird auch bei wiederholtem Klemmen mit der erfindungsgemäßen Vorrichtung nicht beschädigt. Zudem ist die Vorrichtung einfach zu bedienen.

Eine Weiterbildung der Erfindung besteht darin, daß eine Zuglasche vorgesehen ist, an der die Schwenkhebel angelenkt sind.

Bei dieser Ausgestaltung wird die Zuglasche an der Spannvorrichtung befestigt und überträgt dann den Zug auf die Schwenkhebel und verhindert gleichzeitig das Wegkippen nach hinten der Vorrichtung unter Last.

Erfindungsgemäß ist vorgesehen, daß an einem der Schwenkhebel oder an der Zuglasche Befestigungsmittel angeordnet sind, welche das Befestigen einer Spannvorrichtung an der Vorrichtung erleichtern.

Es liegt im Rahmen der Erfindung, daß die Befestigungsmittel als Haken, Öse, Gewinde oder Seilrolle ausgebildet sind.

Eine Weiterbildung der Erfindung besteht darin, daß an jeder Seite der Klemmplatten ein Paar Schwenkhebel angeordnet ist.

Hierdurch wird die mechanische Belastbarkeit der Vorrichtung erhöht, da eine bessere Kraftübertragung von den Schwenkhebeln auf die Klemmplatten möglich ist.

Eine bevorzugte Ausbildung der Erfindung besteht darin, daß die Mittel zum Sichern des Gurtbandes im geklemmten Zustand als Auflage aus einem weicheren Material als das Gurtband, insbesondere einer Gummi- oder Kunststoffauflage, auf den Klemmplatten ausgebildet sind.

Hierdurch wird ein Herausgleiten des Gurtbandes aus den Klemmplatten verhindert.

Es ist erfindungsgemäß vorgesehen, daß die Mittel zum Entfernen der Vorrichtung von dem gespannten Gurtband bzw. zum Aufbringen der Vorrichtung auf ein bereits gespanntes Gurtband als lösbare Befestigung einer der Klemmplatten oder eines Paares von Schwenkhebeln ausgebildet sind.

Eine lösbare Klemmplatte kann beispielsweise mit Flügelmuttern an den Schwenkhebeln befestigt sein, die bei Bedarf gelöst werden können, um die Klemmplatte abzunehmen. Entsprechendes ist auch bei einem lösbaren Paar von Schwenkhebeln möglich.

Alternativ oder in Kombination dazu kann auch vorgesehen sein, daß die Mittel zum Entfernen einer der Klemmplatten oder der Schwenkhebel als zu einer der Seiten hin offene Schlitze in den Schwenkhebeln zur Anlenkung der Klemmplatten ausgebildet sind.

Dies ermöglicht es, die Klemmplatte, ohne Verschraubungen lösen zu müssen, durch einfaches nach hinten klappen der Schwenkhebel zu entfernen.

Eine bevorzugte Ausführung der Erfindung besteht darin, daß der Abstand zwischen den Befestigungsmitteln an einem der Schwenkhebel bzw. dem Anlenkungspunkt an der Zuglasche und dem Anlenkungspunkt der diesem benachbarten Klemmplatte größer ist als der Abstand der Anlenkungspunkte der beiden Klemmplatten.

Durch die Wahl des Abstandes zwischen den Anlenkungspunkten wird das Übersetzungsverhältnis bestimmt. Ein Übersetzungsverhältnis von 1 bis 1,5 hat sich als optimal verwiesen.

Nachfolgend werden Ausführungsbeispiele der Erfindung anhand von Zeichnungen erläutert.

Es zeigen
- Fig. 1: eine Seitenansicht einer ersten erfindungsgemäßen Vorrichtung zum Befestigen und Klemmen von Gurtbändern,
- Fig. 2: eine Seitenansicht einer zweiten erfindungsgemäßen Vorrichtung zum Befestigen und Klemmen von Gurtbändern,
- Fig. 3: eine Seitenansicht einer dritten erfindungsgemäßen Vorrichtung zum Befestigen und Klemmen von Gurtbändern,
- Fig. 4: eine perspektivische Darstellung der in Fig. 3 dargestellten Vorrichtung.

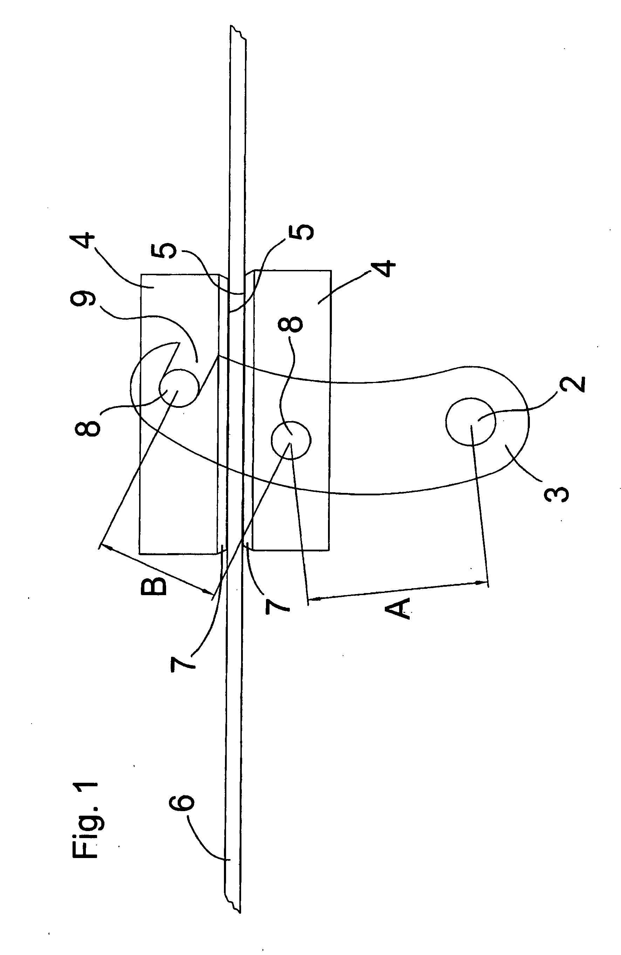

Die Vorrichtung gemäß Fig. 1 weist mindestens ein Paar zueinander parallele Schwenkhebel 3 auf, wobei zwischen den Schwenkhebeln 3 zwei parallel zueinander angeordnete Klemmplatten 4 mit ebenen Klemmflächen 5 angelenkt sind. Vorzugsweise-ist an jeder Seite der Klemmplatten 4 ein Paar Schwenkhebel 3 angeordnet, um eine gleichmäßige Kraftableitung sicherzustellen.

Die Breite der Klemmflächen 5 entspricht mindestens der Breite des jeweiligen Gurtbandes 6. Die Klemmplatten 4 sind mit Mitteln 7 zum Sichern des Gurtbandes 6 im geklemmten Zustand versehen, die beispielsweise als Gummi- oder Kunststoffauflage 7 die Klemmflächen 5 bilden.

Ein Paar der Schwenkhebel 3 weist an seinem freien Ende eine Befestigungsvorrichtung 2 zum Befestigen einer Spannvorrichtung an der Vorrichtung auf. Die Befestigungsmittel 2 sind hier als Querbolzen zwischen den freien Enden des Schwenkhebelpaares oder als Öse 2 an einem Ende der Zuglasche 1 ausgebildet, wobei auch andere Formen, beispielsweise als Haken, als Innengewinde, als Gewindebolzen oder als Seilrolle möglich sind. Mit diesen Befestigungsmitteln 2 kann die Vorrichtung beispielsweise an einem Kettenzug befestigt werden oder als sogenannte lose Rolle in einen Flaschenzug integriert werden.

Wenn auf die Befestigungsvorrichtung über das Befestigungsmittel 2 Zug ausgeübt wird, werden die Schwenkhebel 3 umgelenkt und die Klemmplatten 4 mit ihren Klemmflächen 5 gegeneinander gepreßt, wodurch eine feste Klemmung des Gurtbandes 6 in der Vorrichtung erfolgt und der Zug auf das Gurtband 6 übertragen wird.

Weiterhin sind Mittel 9 zum Entfernen der Vorrichtung von dem gespannten Gurtband 6 bzw. zum Aufbringen der Vorrichtung auf ein bereits gespanntes Gurtband 6 vorgesehen, die als lösbare Befestigung der oberen Klemmplatte 4 ausgebildet sein können, welche sich durch die Schwenkhebel 3 und die obere Klemmplatte 4 erstreckt. Während die untere Klemmplatte 4 mit den Schwenkhebeln 3 vernietet oder unlösbar verschraubt ist, kann die obere Klemmplatte 4 beispielsweise Flügelmuttern aufweisen, die ein Entfernen des Befestigungselementes, das die Schwenkhebel 3 mit den Klemmplatten 4 verbindet, ermöglichen. Gerade auch in Kombination mit einer lösbaren Verschraubung der Klemmplatten 4 können als Mittel zum Entfernen einer der Klemmplatten 4 zu einer der Seiten hin schräg angeordnete offene Schlitze 9 in den Schwenkhebeln 3 ausgebildet sein, die ein Entfernen von Befestigungselementen entbehrlich macht, da durch vorklappen der Schwenkhebel die obere Klemmplatte 4, welche in diesem Fall Bolzen als Anlenkungspunkte 8 beherberg, entfernt werden kann. Entsprechend ist es auch möglich, zum Entfernen der Vorrichtung von dem gespannten Gurtband 6 bzw. zum Aufbringen der Vorrichtung auf ein bereits gespanntes Gurtband 6 ein Paar Schwenkhebel 3 lösbar auszugestalten.

Aus Fig. 1 ist weiterhin zu ersehen, daß der Abstand A zwischen dem Befestigungsmittel 2 und dem Anlenkungspunkt 8 der diesem benachbarten Klemmplatte 4 größer ist als der Abstand B der Anlenkungspunkte 8 der beiden Klemmplatten 4 (vorzugsweise ist A das 1 bis 1,5-fache von B). Dieser Abstand entspricht dem Übersetzungsverhältnis der Vorrichtung.

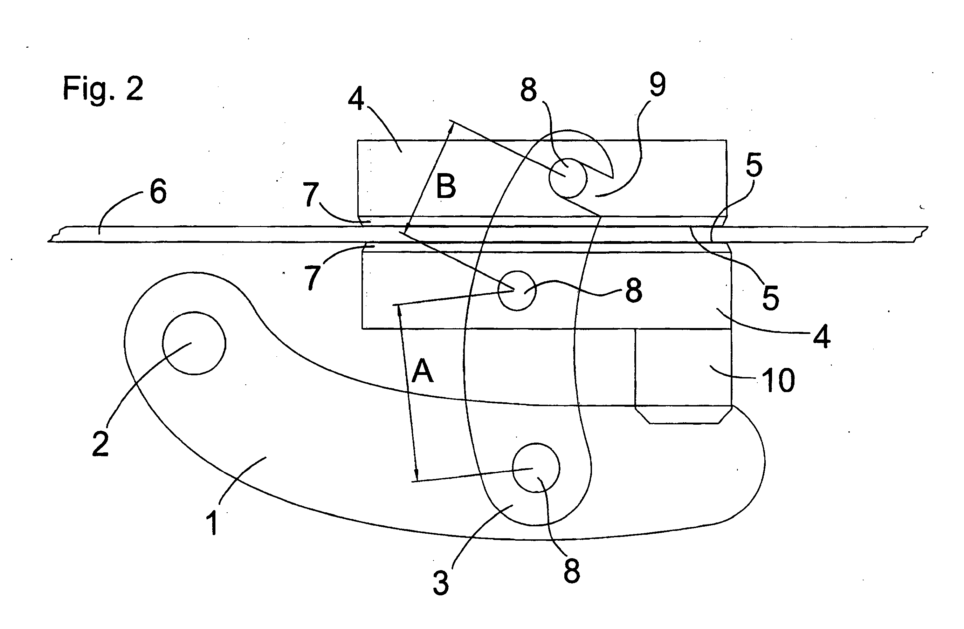

Die Fig. 2 zeigt eine Weiterbildung dieser Vorrichtung, bei der gleiche Teile mit gleichen Bezugszeichen versehen sind wie in Fig. 1. Diese weist eine beispielsweise als gebogenes Metallteil ausgebildete Zuglasche 1 auf, an deren freiem Ende die Befestigungsmittel 2 angeordnet sind. An dieser Zuglasche 1 sind die Schwenkhebel 3 angelenkt. Um ein Wegknicken nach hinten unter Last zu verhindern, wird eine Stützfläche 10 angebracht, welche das Knickmoment der Klemmplatten 4 auf die Zuglasche 1 überträgt und somit mindert.

Aus Fig. 2 ist weiterhin zu ersehen, daß der Abstand A zwischen dem Anlenkungspunkt 8 der Zuglasche 1 und dem Anlenkungspunkt 8 der diesem benachbarten Klemmplatte 4 größer ist als der Abstand B der Anlenkungspunkte 8 der beiden Klemmplatten 4 (vorzugsweise ist A das 1- bis 1,5-fache von B). Dieser Abstand entspricht dem Übersetzungsverhältnis der Vorrichtung.

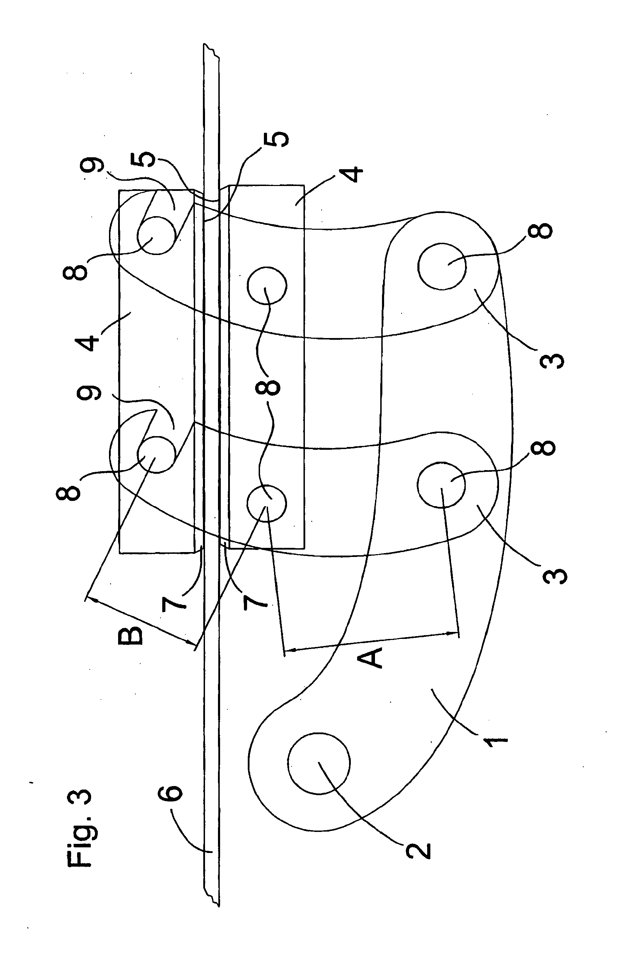

Im übrigen entspricht die Ausführung der Fig. 2 und 3 der Ausführung gemäß Fig. 1.

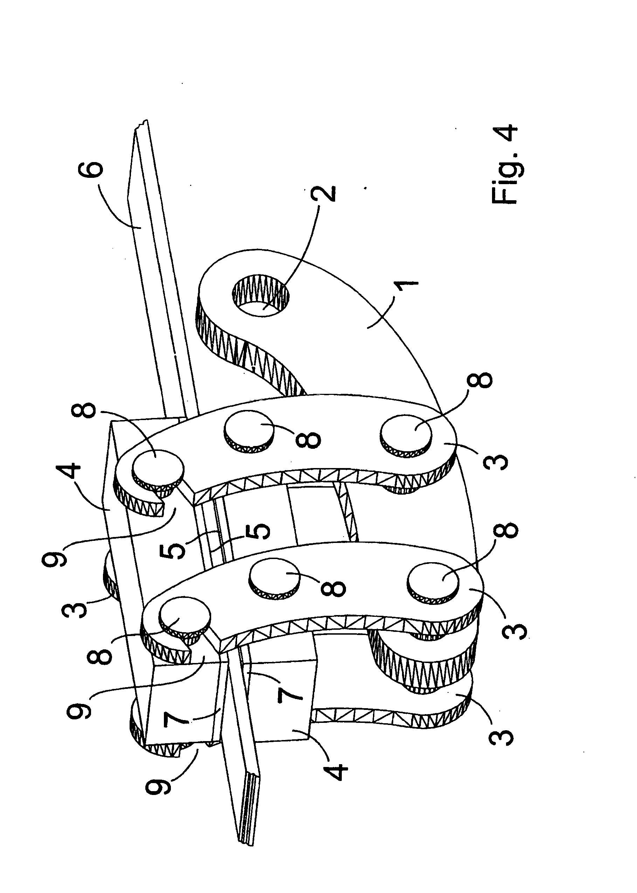

Die Fig. 3 und 4 zeigen eine Weiterbildung dieser Vorrichtung, bei der gleiche Teile mit gleichen Bezugszeichen versehen sind wie in Fig. 1. Diese weist eine beispielsweise als gebogenes Metallteil ausgebildete Zuglasche 1 auf, an deren freiem Ende die Befestigungsmittel 2 angeordnet sind. An dieser Zuglasche 1 sind zwei Paare Schwenkhebel 3 angelenkt.

Aus Fig. 3 ist weiterhin zu ersehen, daß der Abstand A zwischen dem Anlenkungspunkt 8 der Zuglasche 1 und dem Anlenkungspunkt 8 der diesem benachbarten Klemmplatte 4 größer ist als der Abstand B der Anlenkungspunkte 8 der beiden Klemmplatten 4 (vorzugsweise ist A das 1- bis 1,5-fache von B). Dieser Abstand entspricht dem Übersetzungsverhältnis der Vorrichtung.

Im übrigen entspricht die Ausführung der Fig. 3 und 4 der Ausführung gemäß Fig. 1.

### Bezugszeichenliste

- 1: Zuglasche
- 2: Befestigungsmittel
- 3: Schwenkhebel
- 4: Klemmplatte
- 5: Klemmflächen
- 6: Gurtband
- 7: Sicherungsmittel
- 8: Anlenkungspunkt
- 9: Schlitze
- 10: Stützfläche

## Patentansprüche

1. Vorrichtung zum Befestigen und Klemmen von Gurtbändern (6), die mit mindestens einem Paar Schwenkhebel (3) versehen ist, wobei zwischen den Schwenkhebeln (3) zwei parallel zueinander angeordnete Klemmplatten (4) mit ebenen Klemmflächen (5) angelenkt sind, **dadurch gekennzeichnet, daß** die Klemmflächen (5) mit Mitteln (7) zum Sichern des Gurtbandes (6) im geklemmten Zustand versehen sind, deren Breite mindestens der Breite des Gurtbandes (6) entspricht und daß Mittel (9) zum Entfernen der Vorrichtung von dem gespannten Gurtband (6) bzw. zum Aufbringen der Vorrichtung auf ein bereits gespanntes Gurtband (6) vorgesehen sind.

2. Vorrichtung gemäß Anspruch 1, dadurch gelrennzetehnet, daß eine Zuglasche (1) vorgesehen ist, an der die Schwenkhebel (3) angelenkt sind.

3. Vorrichtung gemäß Anspruch 1 oder Anspruch 2, **dadurch gekennzeichnet, daß** an einem der Schwenkhebel (3) oder an der Zuglasche (1) Befestigungsmittel (2) zum Befestigen einer Spannvorrichtung an der Vorrichtung vorgesehen sind

4. Vorrichtung gemäß Anspruch 3, **dadurch gekennzeichnet, daß** die Befestigungsmittel (2) als Haken, Öse, Gewinde oder Seilrolle ausgebildet sind.

5. Vorrichtung gemäß Anspruch 1, **dadurch gekennzeichnet, daß** an jeder Seite der Klemmplatten (4) ein Paar Schwenkhebel (3) angeordnet ist.

6. Vorrichtung gemäß Anspruch 1, **dadurch gekennzeichnet, daß** die Mittel (7) zum Sichern des Gurtbandes (6) im geklemmten Zustand als Gummi- oder Kunststoffauflagen auf den Klemmplatten (4) ausgebildet sind.

7. Vorrichtung gemäß Anspruch 1, **dadurch gekennzeichnet, daß** die Mittel zum Entfernen der Vorrichtung von dem gespannten Gurtband (6) bzw. zum Aufbringen der Vorrichtung auf ein bereits gespanntes Gurtband (6) als lösbare Befestigung einer der Klemmplatte oder eines Paares von Schwenkhebeln ausgebildet sind.

8. Vorrichtung gemäß Anspruch 1 oder 7, **dadurch gekennzeichnet, daß** die Mittel zum Entfernen der Vorrichtung von dem gespannten Gurtband (6) bzw. zum Aufbringen der Vorrichtung auf ein bereits gespanntes Gurtband (6) als zu einer der Seiten hin offene Schlitze in den Schwenkhebeln (3) zur Anlenkung der Klemmplatten (4) ausgebildet sind.

9. Vorrichtung gemäß einem der vorherigen Ansprüche, dadurch gekennzeichet, daß der Abstand (A) zwischen der an einem der Schwenkhebel (3) angeordneten Befestigungsmitteln (2) bzw. dem Anlenkungspunkt (8) an der Zuglasche (1) und dem Anlenkungspunkt (8) der diesem benachbarten Klemmplatten (4) größer ist als der Abstand (B) der Anlenkungspunkte (8) der beiden Klemmplatten (4).

## Claims

1. Device for fastening and clamping straps (6), provided with at least one pair of pivoting levers (3) which are hinged between two mutually parallel clamping plates (4) with flat clamping surfaces (5), wherein said clamping surfaces (5) being at least as wide as the strap (6) and being provided with means (7) for securing the strap (6) in the clamped state and being provided with means (9) for removing the device from the tensioned strap (6) and/or for attaching the device to an already-tensioned strap (6).

2. Device according to claim 1, wherein a tractive member (1) is provided to which the pivoting levers (3) are hinged.

3. Device according to claim 1 or claim 2, wherein a fastening means (2) on one of the pivoting levers (3) or on the tractive member (1) enables a tensioning device to be fastened to the device of the invention.

4. Device according to claim 3, wherein the fastening means (2) is configured as a hook, eye, thread or rope pulley.

5. Device according to claim 1, wherein a pair of pivoting levers (3) is provided on each side of the clamping plates (4).

6. Device according to claim 1, wherein the means (7) for securing the strap (6) in the clamped state is configured as a rubber or plastic coating on the clamping plates (4).

7. Device according to claim 1, wherein the means for removing the device from the tensioned strap (6) and/or for attaching the device to an already-tensioned strap (6) is configured as a releasable fastener for one of the clamping plates or a pair of pivoting levers.

8. Device according to claim 1 or 7, wherein the means for removing the device from the tensioned strap (6) or for attaching the device to an already-tensioned strap (6) is configured as slots in the pivoting levers (3), said slots being open at one end and serving to hinge the pivoting levers (3) to the clamping plates (4).

9. Device according to one of the preceding claims, wherein the distance (A) between the fastening means (2) provided on one of the pivoting levers (3), respectively between the hinge (8) on the tractive member (1), and the hinge (8) on the nearer of the two clamping plates (4) is greater than the distance (B) between the hinges (8) on the two clamping plates (4).

## Revendications

1. Dispositif pour la fixation et le serrage de sangles (6), lequel dispositif est pourvu d'au moins une paire de leviers pivotants (3), deux plaques de serrage (4) étant articulées entre les leviers pivotants (3), les plaques de serrage (4) étant disposées parallèlement entre elles et étant munies de surfaces de serrage (5) planes, **caractérisé en ce que** les surfaces de serrage (5) sont pourvues de moyens (7) pour sécuriser la sangle (6) dans l'état serré, la largeur desdits moyens (7) correspondant au moins à la largeur de la sangle (6) et **en ce que** des moyens (9) sont prévus pour respectivement enlever le dispositif de la sangle (6) tendue ou pour appliquer le dispositif sur une sangle (6) déjà tendue.

2. Dispositif selon la revendication 1, **caractérisé en ce qu'**une patte de traction (1) est prévue sur laquelle sont articulés les leviers pivotants (3).

3. Dispositif selon la revendication 1 ou la revendication 2, **caractérisé en ce que** des moyens de fixation (2) sont prévus sur l'un des leviers pivotants (3) ou sur la patte de traction (1), lesquels moyens permettent la fixation d'un dispositif de tension sur le dispositif de l'invention.

4. Dispositif selon la revendication 3, **caractérisé en ce que** les moyens de fixation (2) sont configurés sous la forme d'un crochet, d'un oeillet, d'un pas de vis ou d'une poulie.

5. Dispositif selon la revendication 1, **caractérisé en ce qu'**une paire de leviers pivotants (3) est prévue de chaque côté des plaques de serrage (4).

6. Dispositif selon la revendication 1, **caractérisé en ce que** les moyens (7) pour sécuriser la sangle (6) dans l'état serré sont configurés sous la forme d'un revêtement en caoutchouc ou en matière plastique disposés sur les plaques de serrage (4).

7. Dispositif selon la revendication 1, **caractérisé en ce que** les moyens pour respectivement enlever le dispositif de la sangle (6) tendue ou pour appliquer le dispositif sur une sangle (6) déjà tendue sont configurés sous la forme d'une fixation détachable d'une des plaques de serrage ou d'une paire de leviers pivotants.

8. Dispositif selon la revendication 1 ou la revendication 7, **caractérisé en ce que** les moyens pour respectivement enlever le dispositif de la sangle (6) tendue ou pour appliquer le dispositif sur une sangle (6) déjà tendue sont configurés sous la forme de fentes réalisées dans les leviers pivotants (3), lesdites fentes étant ouvertes d'un côté et permettant d'articuler les plaques de serrage (4).

9. Dispositif selon l'une des revendications précédentes, **caractérisé en ce que** la distance (A) entre respectivement les moyens de fixation (2) disposés sur l'un des leviers pivotants (3) ou entre le point de pivotement (8) de la patte de traction (1) et le point de pivotement (8) de la plaque de serrage (4) adjacente est plus grande que la distance (B) entre les points de pivotement (8) des deux plaques de serrage (4).
